# EUROPEAN PATENT SPECIFICATION

(11) **EP 3 356 081 B1**
(45) Date of publication and mention of the grant of the patent: **17.07.2019**
(21) Application number: 16805547.3
(22) Date of filing: 01.11.2016
(51) Int. Cl.: F16C 43/04, F16C 19/06, B24B 7/17, B24B 7/04, B24B 41/00, B24B 7/16, B24B 7/06

(54) **SIDE FACE GRINDING SYSTEM FOR BEARING RINGS**
SYSTEM ZUM SEITENFLÄCHENSCHLEIFEN VON LAGERRINGEN
SYSTÈME DE MEULAGE DE FACE LATÉRALE POUR BAGUES DE ROULEMENT

(30) Priority: 26.05.2016 TR 201607060
(43) Date of publication of application: 08.08.2018
(73) Proprietor: Ortadogu Rulman Sanayi Ve Ticaret Anonim Sirketi, 06901 Ankara (TR)
(72) Inventor: BULUT, Fuat, Polatli/Ankara (TR); AKKOC, Ali Osman, 06900 Polatli/Ankara (TR); ERTURUN, Ibis, 06900 Polatli/Ankara (TR)
(74) Representative: Berkkam, Ayfer
(86) International application number: PCT/TR2016/050416
(87) International publication number: WO 2017/204759

(56) References cited:
- EP-A1- 2 260 975
- JP-A- H0 631 621
- JP-A- 2002 307 272

## Description

### Technical Field

This invention is related to a grinding system to grind the side faces of inner and outer rings of roller bearings.

The invention is more particularly related to a grinding system which allows the grinding of the side faces of inner and outer rings of roller bearings, having the same width, together.

### Prior Art

Nowadays roller bearings are used in many mechanical devices. The roller bearings primarily comprise inner and outer rings and roller means.

The grinding of the inner and outer rings is an important process and this process comprises steps that need attention such as transferring the rings to the grinding unit, the production speed and shape of the ground rings.

Generally a unilateral grinding system is present in the methods used. The transferring of the rings into the unit for grinding having a grinding stone, is carried out by means of a mobile system or by the aid of gravity. In other inventions this transfer system has been designed differently in order to save time and to shorten travel distances.

Similarly grinding systems also have different designs. In some inventions two grinding stones or discs are used and in other inventions the grinding stones or discs are used horizontally.

Various methods are known in the art regarding the grinding and transfer of rings to the grinding system.

In the Japanese patent document with the application number JPS5851060A of the known state of the art, two grinding machines which grind inner or outer rings or rings from both sides, conveying a spinning motion in the same direction and a source (race or circular object that is to be grinded) transfer system which feeds said grinding system is described.

In the Japanese patent document with the application number JPH0631621A of the known state of the art, two grinding machines which grind inner or outer rings or rings from both sides, conveying a spinning motion in the same direction and a source (race or circular object that is to be grinded) transfer system which feeds said grinding system is described.

In the United States patent document with the application number US2657504A of the known state of the art, a machine which feeds the unilateral grinding disk, and the grinding of straight or ring discs or the side faces of rings is described.

In the United States patent document with the application number US2015140908A1 of the known state of the art, a machine which carries out vertical grinding having two discs, and the grinding of the side faces of straight or rings discs or rings is described.

In the Patent document with the application number WO2008074174A1 of the known state of the art, a system which delivers the inner or outer rings into a grinding machine, which grinds the corners of said rings rather than their side faces is described.

The Japanese patent document with the application number JP 2002 307272 A of the known state of the art and which represents the closest prior-art to the subject matter of the appended claims, discloses a grinding system suitable for grinding the side faces of the inner rings and the outer rings of roller bearings having the same width, the grinding system comprising, two grinding stones positioned on top of each other with their rotating axes being coaxial and vertical, suitable for grinding the side faces of the inner and outer rings of roller bearings, wherein the inner and outer rings are positioned between the two grindstones, wherein the grinding stones are respectively below and above the rings such that both side faces of the inner and outer rings of roller bearings grind simultaneously, a carrier disc located upstream of the grinding stones, suitable for carrying the inner rings and the outer rings with a radial motion to the space between the grinding stones performing the grinding process.

When the inner and outer rings have different diameters, they require the usage of carrier discs having different sizes and conveyors having different sizes. This situation also requires the adjustment of the carrier discs and the conveyor for each race.

Besides this, the separate grinding of the inner and outer rings also extends the operation time.

Moreover problems are faced during the side face grinding operation of the inner race. The difference of the outer race from the inner race that whose side face is being grinded is that while the rolling path of the inner race is located in the outer diameter, the rolling path of the outer race is located inside the inner diameter. The outer diameters of the rings during side face grinding operations comes into contact with the centering bushing located in the carrier disc. While the planar outer surface of the race is in contact with the centering bushing when the outer race is being grinded, the shoulders of the race are in contact with the centering bushing when the inner race is being grinded. As the surface of the outer race which is in contact with the centering bushing is planar, any kind of problem is not faced during the grinding process, but as the shoulders of the inner race contacts the centering bushing, the centering bushing is worn down in time during grinding. The centering bushing which wears down in time causes the rings to grind incorrectly and therefore the worn down centering bushing needs to be taken out and needs to be replaced with a new centering bushing. This leads to loss of time in terms of production and to extra costs. Moreover in order to reduce the wearing down that occurs during the grinding of the inner race, it is mandatory to use cylindrical rigid metal parts in the centering bushing. The usage of said rigid metal parts also leads to extra cost. Said rigid metal parts are not used during the grinding of the outer race.

Due to these reasons a grinding system needed to be developed which can transfer the inner and outer rings having the same width to the grinding system on the same conveyor, enables to grind the side faces at the same time, which prevents the wearing out of the centering bushing, which eliminates the mandatory usage of cylindrically shaped rigid metal parts in the grinding system and which separates the rings following the grinding procedure.

### Objects and Brief Description of the Invention

The object of this invention is to provide a grinding system which grinds the side faces of the inner and outer rings of roller bearings.

Another object of this invention is to provide a grinding system which enables faster production by grinding together, the side faces of the inner and outer rings having the same width.

Another object of this invention is to provide a grinding system which does not require different adjustments of carrier discs and conveyors for each race, during the grinding of inner and outer rings.

Another object of this invention is to provide a grinding system where the wearing out of the centering bushing is prevented and the need to use cylindrical rigid metal parts within the grinding system is eliminated.

The above object is achieved with a grinding system as defined by the appended claims. The grinding system provided in order to reach the object of this invention, comprises conveyors which transfer the rings that have been placed one within the other onto the carrier disc, a carrier disc which carries the rings to the grinding stone with radial motion and a race separator which separates the rings from each other.

In the grinding system of the invention, the inner and outer rings having the same width, are fed into the side face grinding system at the same time.

Before the process, the inner and outer rings travel on two different conveyors.

The conveyor on which the inner race is driven is at a higher level than the conveyor which delivers the outer race and the inner race located on the conveyor which is at a higher level is pushed and inserted into the outer race located on the other conveyor when they are aligned with each other. The inner race falls into the outer race and both rings are transferred onto the carrier disc in order to be fed into the grinding system.

The inner and outer rings that are delivered one within the other to the carrier disc are entrained in a radial motion between the two grinding stones that move circularly. Grinding process is carried out by two grinding stones which are located below and above the rings, which are in contact with the side faces of both rings.

The inner race and the outer race are separated from each other easily following the grinding process, by means of the race carrier outlet piece. The inner and outer race is delivered together to the outlet piece and an orifice large enough to allow the passage of the inner race but not the outer race is provided in the outlet piece. The inner rings fall through this orifice and are collected into a basket. The outer rings which do not pass through the orifice passes the race carrier outlet piece and are collected into a different basket which accommodates ground outer rings.

### Detailed Description of the Invention

The grinding system provided in order to reach the object of the invention has been shown in the attached figures.

Said figures illustrate the following;

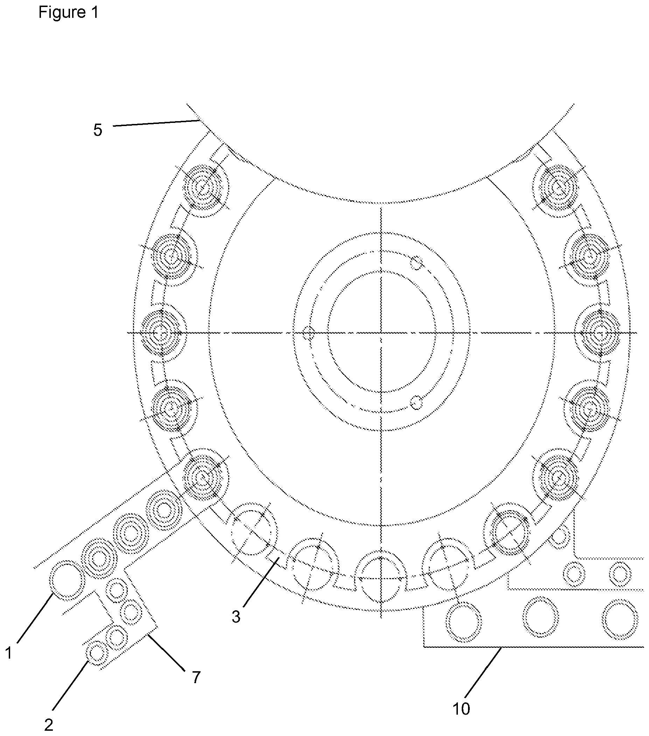

Figure 1, is the schematic view of the grinding system subject to the invention.

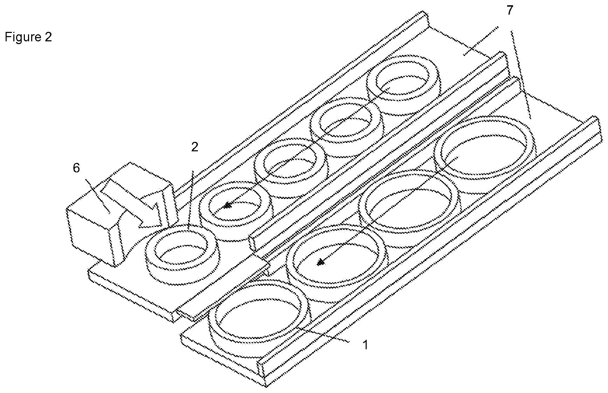

Figure 2, is the perspective view of the conveyors of the grinding system where the race inserter has not inserted the inner race into the outer race.

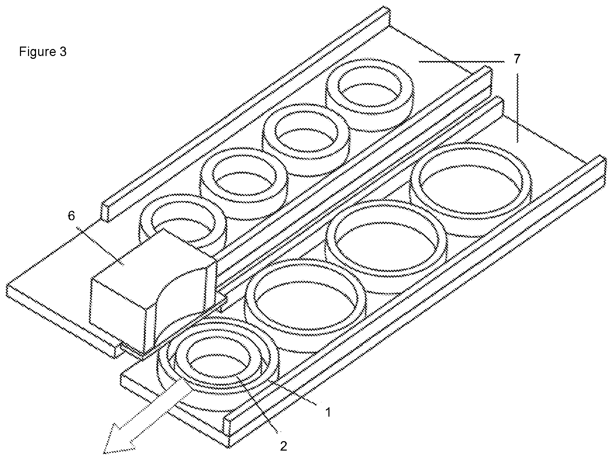

Figure 3, is the perspective view of the conveyors of the grinding system subject to the invention where the race inserter has inserted the inner race into the outer race.

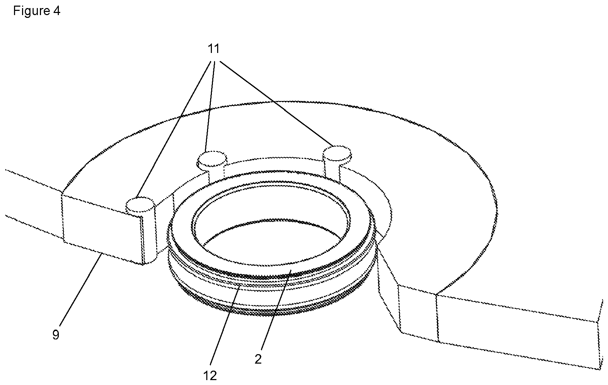

Figure 4, is the view of the inner race together with rigid metal parts located inside the centering bushing within the grinding system not according to the present invention.

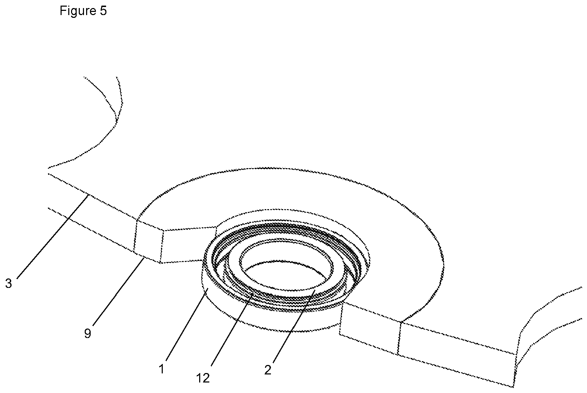

Figure 5, is the view of the inner race and the outer race placed one within the other into the centering bushing within the grinding system subject to the invention.

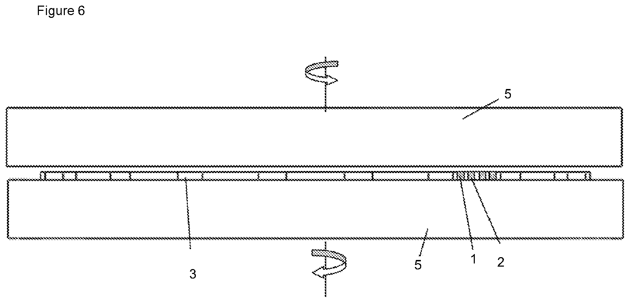

Figure 6, is the side view of the grinding stones carrying out the grinding process within the grinding system subject to the invention.
Figure 7, is the top view of the race separator which separates the inner and outer rings within the grinding system subject to the invention.

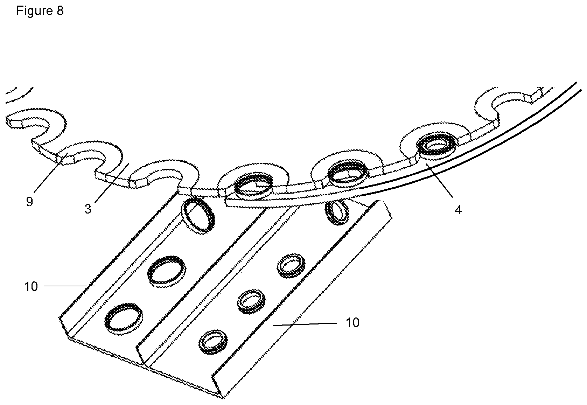

Figure 8, is the partial view of the race separator together with the carrier disc which separates the inner and outer rings within the grinding system subject to the invention.

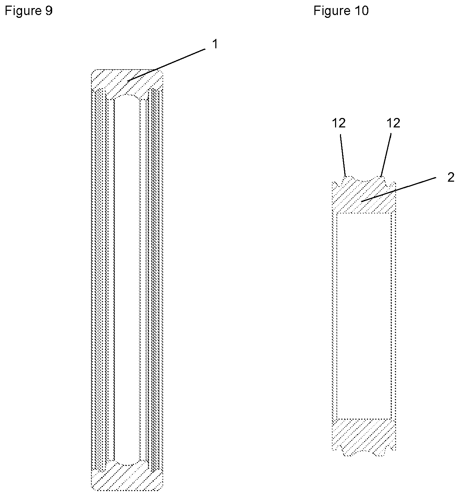

Figure 9, is the section view of the outer race in the grinding system subject to the invention.
Figure 10, is the section view of the inner race in the grinding system subject to the invention.

The parts in the figures are numbered individually and the references corresponding to the related part are listed below.
- **1.**: Outer race
- **2.**: Inner race
- **3.**: Carrier disc
- **4.**: Race separator
- **5.**: Grinding stone
- **6.**: Race inserter
- **7.**: Conveyor
- **8.**: Orifice
- **9.**: Centering bushing
- **10.**: Outlet conveyor
- **11.**: Rigid metal parts
- **12.**: Inner race shoulders

The grinding system subject to the invention comprises;
- a carrier disc (3) which carries with a radial motion, the inner rings (2) and the outer rings (1) to the grinding stones (5) performing the grinding process,
- two grinding stones (5) positioned on top of each other in order to grind the side faces of the inner (2) and outer rings (1),
- a centering bushing (9) which centres the inner (2) and outer rings (1) that have been placed one within the other located on the carrier disc (3),
- conveyors (7) which delivers rings thereon and which ensures that the inner rings (2) are at a higher level and the outer rings (1) are at a lower level,
- a race inserter (6) which pushes the inner rings (2) located on the top conveyor (7) into the outer rings (1) located on the bottom conveyor (7), therefore enabling the inner rings (2) into the outer rings (1),
- a race separator (4) located fixedly beneath the carrier disc (3) used in order to separate the rings exiting out of the grinding system having an orifice (8) at the section after the grinding stones (5), whose diameter is smaller than the diameter of the outer race (1) but larger than the diameter of the inner race (2) in order to drop the inner rings into a basket and which also has an opening after the orifice (8) in order to enable the outer rings (1) to also be dropped into another basket.

The grinding system subject to the invention comprises outlet conveyors (10) located beneath the orifice (8) through which the inner rings (2) are dropped and beneath the opening through which the outer rings (1) are dropped by means of the race separator (4).

The inner rings (2) and the outer rings (1) that need to be inserted into the system in order to be grinded, are initially placed on two conveyors (7) having different heights from each other. (Figure - 3)

The inner rings, (2) placed on the higher conveyor (7) are pushed inside the outer rings (1) placed on the lower conveyor (7) by means of the rings inserter (6). By this means the inner rings (2) are inserted into the outer rings (1). (Figure - 3)

The rings that have been inserted into each other at the lower conveyor (7) are delivered into the centering bushing located on the carrier disc (3) from said lower conveyor (7). (Figure - 1)

As a result of the insertion of the inner rings (2) into the outer rings (1) the usage, of rigid metal parts (11) in order to prevent the wearing down of the inner surface of the centering bushing (9) by the shoulders (12) of the inner rings is no longer required. (Figure -4 and Figure-5)

The rings that have been placed one in the other are entrained to be delivered between the grinding stones (5) that shall carry out the grinding process via the carrier disc (3) which exhibits a smooth radial motion. (Figure - 1)

The rings whose side faces are being grinded between the grinding stones (5) are separated by the race separator (4) comprising an orifice whose diameter is larger than the diameter of the inner rings (2) but smaller than the diameter of the outer rings (1) are passed over the orifice (8) and then over the opening which allows the outer rings (1) to be dropped there through. (Figure - 1)

The rings reach the orifice (8) located on the race separator (4) and the inner rings (2) which have a smaller diameter compared to the outer rings (1) drop down into the outlet conveyor (10) through the orifice (8) while they are passing over the orifice (8) which has a diameter suitable to the outer diameter of the inner rings. At this moment, as the diameter of the outer race (1) is larger than the diameter of the orifice (8), the outer rings (1) continue to move over the orifice (8). (Figure -7 and Figure-8)

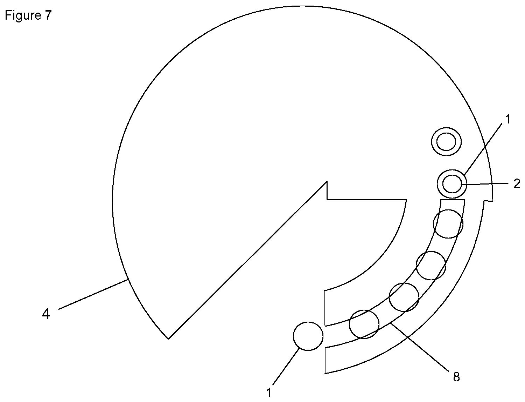

An opening is provided after the orifice (8) of the race separator (4). (Figure 7) The outer rings (1) that do not drop through the orifice (8), then drop through this opening. The outer rings (1) drop onto the outlet conveyor (10) located below this opening.

## Claims

1. **A grinding system** suitable for grinding the side faces of the inner rings (2) and the outer rings (1) of bearings having the same width, the grinding system comprising,
- **two conveyors (7),** comprising a top conveyor (7) and a bottom conveyor (7), wherein the top conveyor is placed higher than the bottom conveyor in the vertical direction, wherein the conveyors are configured to deliver rings thereon and are configured such that the inner rings (2) are at a higher level and the outer rings (1) are at a lower level in the vertical direction,
- **a race inserter (6)** configured to push the inner rings (2) located on the top conveyor (7) into the outer rings (1) located on the bottom conveyor (7), therefore enabling the inner rings (2) into the outer rings (1),
- **a carrier disc (3),** downstream of the race inserter (6), configured to carry the inner rings (2) centered within the outer rings (1) with a radial motion to the space between the grinding stones (5) performing the grinding process,
- **a centering bushing (9)** located on the carrier disc (3) configured to centre the inner (2) and outer rings (1) that have been placed one within the other,
- **two rotating grinding stones (5)** positioned on top of each other, configured to grind the side faces of the inner (2) and outer rings (1) of bearings, wherein the grinding stones (5) are respectively below and above the inner and outer rings such that both side faces of the inner (2) and outer rings (1) of bearings are ground simultaneously,
- **a race separator (4)** located fixedly beneath the carrier disc (3) and downstream of the grinding stones (5) configured to separate the inner from the outer ring (1) exiting out of the grinding system, the race separator (4) having a first orifice (8) at the section after the grinding stones (5), wherein the diameter of the orifice (8) smaller than the diameter of the outer ring (1) but larger than the diameter of the inner ring (2) such that the inner rings (2) drop into a first basket and the race separator (4) having a second opening after the orifice (8) such that to enable the outer rings (1) to drop into another basket.

2. A grinding system according to claim 1, **characterized in that** it comprises outlet conveyors (10) located beneath the orifice (8) through which the inner rings (2) are dropped and beneath the opening through which the outer rings (1) are dropped by means of the race separator (4).

## Patentansprüche

1. **Schleifsystem,** das zum Schleifen der Seitenflächen der Innenringe (2) und der Außenringe (1) von Lagern mit gleicher Breite geeignet ist, das Schleifsystem umfasst,
- **zwei Förderer (7),** umfassend einen oberen Förderer (7) und einen unteren Förderer (7), wobei der obere Förderer in vertikaler Richtung höher als der untere Förderer angeordnet ist, wobei die Förderer konfiguriert sind, um Ringe darauf zu liefern, und so konfiguriert sind, dass der Innenringe (2) auf einem höheren Niveau sind und der Außenringe (1) in vertikaler Richtung auf einem niedrigeren Niveau sind,
- **eine Laufradeinsetzer (6)** die konfiguriert ist, um die auf dem oberen Förderer (7) befindlichen Innenringe (2) in die auf dem unteren Förderer (7) befindlichen Außenringe (1) zu schieben, um so die Innenringe (2) in die Außenringe (1) zu ermöglichen,
- **eine Trägerscheibe (3),** stromabwärts des Laufradeinsetzers (6), die konfiguriert ist, um die in den Außenringen (1) zentrierten Innenringe (2) mit einer radialen Bewegung in den Raum zwischen den Schleifsteinen (5) zu tragen, die den Schleifvorgang durchführen,
- **eine Zentrierbuchse (9)** die sich auf der Trägerscheibe (3) befindet und konfiguriert ist, um die Innen- (2) und Außenringe (1) zu zentrieren, die ineinander angeordnet wurden,
- **zwei rotierende Schleifsteine (5)** die übereinander angeordnet sind, die konfiguriert sind, um die Seitenflächen der Innen- (2) und Außenringe (1) von Lagern zu schleifen, wobei die Schleifsteine (5) jeweils unterhalb und oberhalb der Innen- und Außenringe liegen, so dass beide Seitenflächen der Innen- (2) und Außenringe (1) von Lagern gleichzeitig geschliffen werden,
- **einen Laufradabscheider (4)** der fest unterhalb der Trägerscheibe (3) und stromabwärts der Schleifsteine (5) angeordnet ist, der konfiguriert ist, um den inneren vom Außenringe (1) zu trennen, der aus dem Schleifsystem austritt, der Laufabscheider (4) eine erste Öffnung (8) am Abschnitt nach den Schleifsteinen (5) aufweist, wobei der Durchmesser der Öffnung (8) kleiner als der Durchmesser des Außenrings (1), aber größer als der Durchmesser des Innenrings (2) ist, so dass die Innenringe (2) in einen ersten Korb fallen und der Laufabscheider (4) eine zweite Öffnung nach der Öffnung (8) aufweist, sodass die Außenringe (1) in einen anderen Korb fallen können.

2. Schleifsystem nach Anspruch 1, **dadurch gekennzeichnet, dass** es Auslaufförderer (10) umfasst, die sich unterhalb der Öffnung (8) befinden, durch die die Innenringe (2) fallen gelassen werden, und unterhalb der Öffnung, durch die die Außenringe (1) mittels des Laufabscheider (4) fallen gelassen werden.

## Revendications

1. **Système de broyage** approprié pour broyer les faces latérales des anneaux intérieures (2) et des anneaux extérieures (1) de roulements ayant la même largeur, le système de broyage comprenant,
- **deux convoyeurs (7),** comprenant un convoyeur supérieur (7) et un convoyeur inférieur (7), dans laquelle le convoyeur supérieur est placé plus haut que le convoyeur inférieur dans la direction verticale, dans laquelle les convoyeurs sont configurés pour délivrer des anneaux sur ceux-ci et sont configurés de telle sorte que les anneaux intérieurs (2) sont à un niveau supérieur et les anneaux extérieurs (1) sont à un niveau inférieur dans la direction verticale,
- **un dispositif d'insertion de bague (6)** configuré pour pousser les anneaux intérieures (2) situées sur le convoyeur supérieur (7) dans les anneaux extérieures (1) situées sur le convoyeur inférieur (7), permettant ainsi aux anneaux intérieures (2) dans les anneaux extérieures (1),
- **un disque support (3),** en aval de l'unité d'insertion de bague (6), configuré pour porter les anneaux intérieurs (2) centrées dans les anneaux extérieurs (1) avec un mouvement radial à l'espace entre les pierres à broyer (5) effectuant l'opération de broyage,
- **une douille de centrage (9)** située sur le disque support (3) configurée pour centrer les anneaux intérieure (2) et extérieure (1) qui ont été placées l'une dans l'autre,
- **deux pierres à broyer tournantes (5)** superposées, configurées pour broyer les faces latérales des anneaux intérieure (2) et extérieure (1) des paliers, dans laquelle les pierres à broyer (5) sont respectivement au-dessous et au-dessus des anneaux intérieure et extérieure, de sorte que les deux faces latérales des anneaux intérieure (2) et extérieure (1) des roulements sont broyées simultanément,
- **un séparateur de bague (4)** situé de manière fixe sous le disque support (3) et en aval des pierres à broyer (5), configuré pour séparer l'anneau intérieure de l'anneau extérieure (1) qui sort du système de broyage, le séparateur de bague (4) ayant un premier orifice (8) à la section après les pierres à broyer (5), dans laquelle le diamètre de l'orifice (8) est inférieur au diamètre de l'anneau extérieure (1) mais supérieur au diamètre de la anneau intérieure (2) de sorte que les anneaux intérieures (2) tombent dans un premier panier et le séparateur de bague (4) ayant une seconde ouverture après l'orifice (8) de sorte que pour permettre aux anneaux extérieures (1) de tomber dans un autre panier.

2. Système de broyage selon la revendication 1, **caractérisé en ce que** il comprend des convoyeurs de sortie (10) situés sous l'orifice (8) à travers lequel les anneaux intérieures (2) tombent et sous l'ouverture à travers laquelle les anneaux extérieures (1) tombent au moyen du séparateur à bague (4).
